# EUROPEAN PATENT APPLICATION

(11) **EP 4 510 212 A1**
(43) Date of publication of application: **19.02.2025**
(21) Application number: 23870595.8
(22) Date of filing: 21.09.2023
(51) Int. Cl.: H01M 4/13, H01M 4/36, H01M 10/0525

(54) **NEGATIVE ELECTRODE SHEET AND PREPARATION METHOD THEREFOR, SECONDARY BATTERY, BATTERY PACK AND ELECTRICAL DEVICE**

(30) Priority: 28.09.2022 WO PCT/CN2022/122013
(71) Applicant: Contemporary Amperex Technology Co., Limited, Ningde, Fujian 352100 (CN)
(72) Inventor: TIAN, Yaxi, Ningde, Fujian 352100 (CN); TANG, Daichun, Ningde, Fujian 352100 (CN); WANG, Xitong, Ningde, Fujian 352100 (CN); JI, Tingzhen, Ningde, Fujian 352100 (CN); XIA, Yurun, Ningde, Fujian 352100 (CN); QIN, Xiong, Ningde, Fujian 352100 (CN)
(74) Representative: Ziebig Hengelhaupt Intellectual Property Attorneys Patentanwaltskanzlei PartGmbB
(86) International application number: PCT/CN2023/120503
(87) International publication number: WO 2024/067363

(57) **Abstract**

This application discloses a negative electrode plate (100) and a preparation method thereof, a secondary battery (5), a battery pack (1), and an electric apparatus. The negative electrode plate (100) includes a negative electrode current collector (110) and a negative electrode material layer disposed on at least one surface of the negative electrode current collector (110). The negative electrode material layer includes a negative electrode active substance, and the negative electrode material layer has a structure in which high-compacted-density regions (1110) and low-compacted-density regions (1120) are consecutively and alternately spaced apart, a density difference of the negative electrode active substances in the high-compacted-density regions (1110) and low-compacted-density regions (1120) being 0.1 g/cm³-0.6 g/cm³.

## Description

### TECHNICAL FIELD

This application relates to the field of secondary battery technologies, and in particular, to a negative electrode plate and a preparation method thereof, a secondary battery, a battery pack, and an electric apparatus.

### BACKGROUND

Featured by low costs, long service life, high safety, and the like, secondary batteries have become popular energy storage systems, and have been widely used in fields such as battery electric vehicles, hybrid electric vehicles, and smart power grids. A secondary battery mainly includes a positive electrode plate, a negative electrode plate, a separator, and an electrolyte, where the negative electrode plate includes a negative electrode current collector and a negative electrode material layer disposed on at least one surface of the negative electrode current collector, and the negative electrode material layer includes a negative electrode active substance. The negative electrode material layer needs to be infiltrated by the electrolyte, so that lithium intercalation can be implemented in both the surface and the inside of the negative electrode material layer. For this objective, in the related art, the internal lithium intercalation is typically promoted by making the negative electrode material layer have a large number of pores, so that the electrolyte has a high transmission velocity inside the negative electrode material layer. To form internal pores, pore-forming agents typically need to be added into a mixture for preparing the negative electrode material layer. However, this not only increases material costs but also requires these pore-forming agents to be removed in subsequent steps through cumbersome and expensive operations.

Therefore, there is still a need to provide a new negative electrode plate. The new negative electrode plate can have an improved electrolyte transmission velocity and improved charging performance, and can achieve pore formation without using any pore-forming agents, thereby reducing the production costs.

### SUMMARY

This application has been made in view of the foregoing issues, with an objective to provide a negative electrode plate, so as to solve the technical problems of an insufficient electrolyte transmission velocity of the negative electrode plate and poor charging performance of a secondary battery prepared by the negative electrode plate.

To achieve the foregoing objective, a first aspect of this application provides a negative electrode plate. The negative electrode plate includes a negative electrode current collector and a negative electrode material layer disposed on at least one surface of the negative electrode current collector, where the negative electrode material layer includes a negative electrode active substance, and the negative electrode material layer has a structure in which high-compacted-density regions and low-compacted-density regions are consecutively and alternately spaced apart, a density difference of the negative electrode active substances in the high-compacted-density regions and low-compacted-density regions being 0.1 g/cm³-0.6 g/cm³, optionally 0.2 g/cm³-0.4 g/cm³.

The negative electrode plate of this application includes the negative electrode material layer with the specified structure, allowing different regions inside the negative electrode material layer to have different porosities without using any pore-forming agents. This increases a transmission velocity of an electrolyte in the negative electrode plate, thereby improving the charging performance.

In some embodiments, 0≤|x₁-x₂|≤100 mm.

In some embodiments, 0≤|x₁-x₂|≤120 µm.

In some embodiments, 60 µm≤|x₁-x₂|≤120 µm.

In some embodiments, 80 µm≤|x₁-x₂|≤120 µm.

Thus, further adjusting a difference of an upper surface width and a lower surface width of the low-compacted-density region can change a shape of the low-compacted-density region, thereby controlling the transmission velocity of the electrolyte in the negative electrode material layer.

In some embodiments, 20 µm≤x₁≤100 mm.

In some embodiments, 20 µm≤x₁≤200 µm.

In some embodiments, 20 µm≤x₂≤100 mm.

In some embodiments, 20 µm≤x₂≤200 µm.

Thus, making the values of x₁ and x₂ fall within the foregoing ranges allows the low-compacted-density region to have different shapes, thereby increasing the transmission velocity of the electrolyte and improving the charging performance of the secondary battery.

In some embodiments, the density of the negative electrode active substance in the high-compacted-density region is 1.6 g/cm³-1.9 g/cm³.

In some embodiments, the density of the negative electrode active substance in the low-compacted-density region is 1.3 g/cm³-1.8 g/cm³.

Thus, making the densities of the negative electrode active substances in the low-compacted-density region and high-compacted-density region fall within the foregoing ranges increases the energy density of the secondary battery.

In some embodiments, based on a total volume of the negative electrode material layer, a ratio of a total volume percentage of a plurality of low-compacted-density regions to a total volume percentage of a plurality of high-compacted-density regions is 0.005-0.01. Thus, the transmission velocity of the electrolyte is increased, the infiltration of the electrolyte at the negative electrode plate is improved, and the charging performance of the secondary battery is improved.

In some embodiments, based on the total volume of the negative electrode material layer, the total volume percentage of the plurality of low-compacted-density regions is 0.005-0.009.

In some embodiments, based on the total volume of the negative electrode material layer, the total volume percentage of the plurality of low-compacted-density regions is 0.006-0.008.

In some embodiments, based on the total volume of the negative electrode material layer, the total volume percentage of the plurality of high-compacted-density regions is 0.99-0.995.

In some embodiments, based on the total volume of the negative electrode material layer, the total volume percentage of the plurality of high-compacted-density regions is 0.992-0.994.

Thus, the transmission velocity of the electrolyte is increased, the infiltration of the electrolyte at the negative electrode plate is improved, and the charging performance of the secondary battery is improved.

In some embodiments, the negative electrode active substance in a same low-compacted-density region has different densities, and a density difference of the negative electrode active substance in the same low-compacted-density region is less than or equal to 0.5 g/cm³. Thus, the transmission velocity of the electrolyte is increased, the infiltration of the electrolyte at the negative electrode plate is improved, and the charging performance of the secondary battery is improved.

In some embodiments, an extension direction of the low-compacted-density region and an extension direction of the high-compacted-density region are parallel to a width direction of the negative electrode plate. Thus, the transmission velocity of the electrolyte is increased, the infiltration of the electrolyte at the negative electrode plate is improved, and the charging performance of the secondary battery is improved.

In some embodiments, the negative electrode current collector is a metal foil or a composite current collector, and the composite current collector includes a polymer material matrix and a metal layer formed on at least one surface of the polymer material matrix. Thus,

In some embodiments, the negative electrode active substance includes at least one of graphite, soft carbon, hard carbon, mesocarbon microbeads, carbon fiber, carbon nanotubes, elemental silicon, silicon-oxygen compound, silicon-carbon composite, or lithium titanate.

A second aspect of this application provides a method for preparing the negative electrode plate according to the first aspect of this application. The method includes the following step:
forming a negative electrode material layer on at least one surface of a negative electrode current collector, where the negative electrode material layer includes a negative electrode active substance, and the negative electrode material layer has a structure in which high-compacted-density regions and low-compacted-density regions are consecutively and alternately spaced apart, a density difference of the negative electrode active substances in the high-compacted-density regions and low-compacted-density regions being 0.1 g/cm³-0.6 g/cm³, optionally 0.2 g/cm³-0.4 g/cm³. Thus, the infiltration of the electrolyte at the negative electrode plate is improved.

In some embodiments, a method for forming the negative electrode material layer includes: forming a first slurry in a first region of the negative electrode current collector to form the low-compacted-density region, and forming a second slurry in a second region of the negative electrode current collector to form the high-compacted-density region. Thus, the transmission velocity of the electrolyte is increased, the infiltration of the electrolyte at the negative electrode plate is improved, and the charging performance of the secondary battery is improved.

In some embodiments, no pore-forming agent is used in the method. Thus, the transmission velocity of the electrolyte is increased, and the production costs are reduced.

A third aspect of this application provides a secondary battery including the negative electrode plate according to the first aspect of this application.

A fourth aspect of this application provides a battery pack including the secondary battery according to the third aspect of this application.

A fifth aspect of this application provides an electric apparatus including the secondary battery according to the third aspect of this application or the battery pack according to the fourth aspect of this application.

### BRIEF DESCRIPTION OF DRAWINGS

To describe the technical solutions in the embodiments of this application more clearly, the following briefly describes the accompanying drawings required for describing embodiments of this application. Apparently, the accompanying drawings in the following description show only some embodiments of this application, and persons of ordinary skill in the art may still derive other drawings from these accompanying drawings without creative efforts.
FIG. 1 is a schematic diagram of a negative electrode material layer according to an embodiment of this application.
FIG. 2 is a cross-sectional view along direction BB' in FIG. 1.
FIG. 3 is a schematic diagram of a negative electrode material layer according to another embodiment of this application.
FIG. 4 is a schematic diagram of a negative electrode material layer according to another embodiment of this application.
FIG. 5 is a schematic diagram of a lithium-ion secondary battery according to an embodiment of this application.
FIG. 6 is an exploded view of the lithium-ion secondary battery according to the embodiment of this application in FIG. 5.
FIG. 7 is a schematic diagram of a battery module according to an embodiment of this application.
FIG. 8 is a schematic diagram of a battery pack according to an embodiment of this application.
FIG. 9 is an exploded view of the battery pack according to the embodiment of this application in FIG. 8.
FIG. 10 is a schematic diagram of an electric apparatus using a battery pack as a power source according to an embodiment of this application.

Description of reference signs:
1. battery pack
2. upper box body
3. lower box body
4. battery module
5. lithium-ion secondary battery
51. housing
52. electrode assembly
53. cover plate
100. negative electrode plate
110. negative electrode current collector
120. negative electrode tab
1110. high-compacted-density region
1120. low-compacted-density region

### DESCRIPTION OF EMBODIMENTS

For brevity, this application specifically discloses some numerical ranges. However, any lower limit may be combined with any upper limit to form an unspecified range, and any lower limit may be combined with another lower limit to form an unspecified range, and likewise, any upper limit may be combined with any other upper limit to form an unspecified range. In addition, each individually disclosed point or individual single numerical value may itself be a lower limit or an upper limit which can be combined with any other point or individual numerical value or combined with another lower limit or upper limit to form a range not expressly recorded.

With the rapid popularization of electric vehicles and other electric transportation tools, the market demand for secondary batteries with high charging performance is also becoming increasingly urgent. To improve the charging performance of a secondary battery, an effective way is to increase an infiltration velocity of an electrolyte at a negative electrode plate and improve intercalation of active ions in a negative electrode active substance inside the negative electrode plate. However, since the surface of the negative electrode plate is easily passivated after the intercalation of active ions, and the intercalated active ions easily block pores in the surface of the electrode plate, subsequent active ions are less likely to penetrate deep into a negative electrode active material layer. Adding a pore-forming agent into the negative electrode active material layer can increase the porosity inside the negative electrode active material layer. However, due to a relatively uniform porosity in the negative electrode active material layer, the electrolyte is still less likely to penetrate deep into the negative electrode active material layer, this is because the electrolyte has insufficient transmission kinetics under the relatively uniform porosity. In the related art, one or more of calcium oxide, magnesium oxide, germanium oxide, and tin oxide are used as pore-forming agents, and these pore-forming agents need to be removed in subsequent steps. This not only increases material costs but also makes preparation of the negative electrode plate more cumbersome.

This application provides a negative electrode plate. The negative electrode plate includes no pore-forming agent. A negative electrode material layer on the negative electrode plate includes high-compacted-density regions and low-compacted-density regions. The porosity of the high-compacted-density regions is different from that of the low-compacted-density regions. The high-compacted-density regions and the low-compacted-density regions are alternately arranged, which can improve the transmission kinetics of an electrolyte in the negative electrode plate and increase a transmission velocity of the electrolyte, thereby improving the infiltration of the electrolyte at the negative electrode plate and improving the charging performance of a secondary battery.

The negative electrode plate provided in this application is applicable to lithium-ion secondary batteries and sodium-ion secondary batteries. The secondary battery disclosed in the embodiments of this application can be used in electric devices that use secondary batteries as power sources or in various energy storage systems that use secondary batteries as energy storage elements. The electric device may include but is not limited to a mobile phone, a tablet, a laptop computer, an electric toy, an electric tool, an electric bicycle, an electric vehicle, a ship, and a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

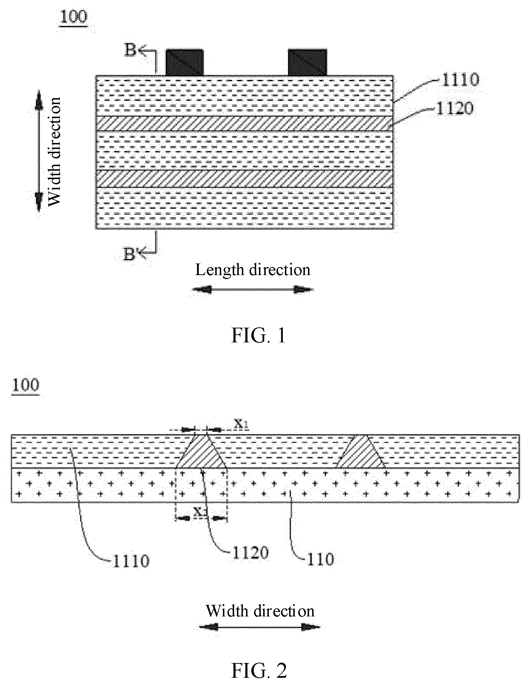

A first aspect of this application provides a negative electrode plate 100. Referring to FIGs. 1 and 2, the negative electrode plate 100 includes a negative electrode current collector 110 and a negative electrode material layer disposed on at least one surface of the negative electrode current collector 110, where the negative electrode material layer includes a negative electrode active substance, and the negative electrode material layer has a structure in which high-compacted-density regions 1110 and low-compacted-density regions 1120 are consecutively and alternately spaced apart, a density difference of the negative electrode active substances in the high-compacted-density regions 1110 and low-compacted-density regions 1120 being 0.1 g/cm³-0.6 g/cm³.

The negative electrode plate 100 of this application includes the negative electrode material layer with the specified structure, so that the high-compacted-density regions 1110 and the low-compacted-density regions 1120 with different porosities can be formed on the negative electrode material layer without using any pore-forming agents, and an electrolyte passes through the high-compacted-density regions 1110 and the low-compacted-density regions 1120. This can improve the transmission kinetics of the electrolyte and increase a transmission velocity of the electrolyte, thereby improving the infiltration of the electrolyte at the negative electrode plate 100.

In some embodiments, the density difference of the negative electrode active substances in the high-compacted-density regions 1110 and low-compacted-density regions 1120 is 0.1 g/cm³-0.6 g/cm³. For example, the density difference may be 0.1 g/cm³, 0.15 g/cm³, 0.2 g/cm³, 0.25 g/cm³, 0.3 g/cm³, 0.35 g/cm³, 0.4 g/cm³, 0.45 g/cm³, 0.5 g/cm³, 0.55 g/cm³, or 0.6 g/cm³, or may fall within a range defined by any of the foregoing values. In some specific embodiments, the density difference of the negative electrode active substances in the high-compacted-density regions 1110 and low-compacted-density regions 1120 is 0.2 g/cm³-0.4 g/cm³.

In some embodiments, based on the density difference of the negative electrode active substances in the high-compacted-density regions 1110 and low-compacted-density regions 1120 meeting the foregoing range, the density of the negative electrode active substance in the high-compacted-density region 1110 may be 1.6 g/cm³-1.9 g/cm³. For example, the density may be 1.6 g/cm³, 1.65 g/cm³, 1.7 g/cm³, 1.75 g/cm³, 1.8 g/cm³, 1.85 g/cm³, or 1.9 g/cm³, or may fall within a range defined by any of the foregoing values.

In some embodiments, based on the density difference of the negative electrode active substances in the high-compacted-density regions 1110 and low-compacted-density regions 1120 meeting the foregoing range, the density of the negative electrode active substance in the low-compacted-density region 1120 may be 1.3 g/cm³-1.8 g/cm³. For example, the density may be 1.3 g/cm³, 1.35 g/cm³, 1.4 g/cm³, 1.45 g/cm³, 1.5 g/cm³, 1.55 g/cm³, 1.6 g/cm³, 1.65 g/cm³, 1.7 g/cm³, 1.75 g/cm³, or 1.8 g/cm³, or may fall within a range defined by any of the foregoing values.

In this application, the density of the negative electrode active substance refers to a compacted density of the negative electrode material layer. A test method of the compacted density is as follows: during a coating process, an offline laser thickness gauge is used to monitor the thickness of a coated region in a real-time manner, where the thickness is positively correlated with the coating weight. An electrode plate in a specified region is taken and weighed. The coating weight is obtained by subtracting the weight of a negative electrode current collector from the weight of the electrode plate. The density is calculated using the following formula: density=coating weight/(thickness of electrode plate thickness-thickness of negative electrode current collector).

In some embodiments, the low-compacted-density region 1120 has an upper surface width x₁ and a lower surface width x₂, satisfying 0≤|x₁-x₂|≤100 mm. For example, |x₁-x₂| may be 0 mm, 10 mm, 20 mm, 30 mm, 40 mm, 50 mm, 60 mm, 70 mm, 80 mm, 90 mm, or 100 mm, or may fall within a range defined by any of the foregoing values. In some specific embodiments, 60 µm≤|x₁-x₂|≤120 µm. In some specific embodiments, 80 µm≤|x₁-x₂|≤120 µm. Here, the upper surface refers to a surface of the negative electrode material layer away from the negative electrode current collector 110, and the lower surface refers to a surface of the negative electrode material layer close to the negative electrode current collector 110.

In this application, a test method of x₁ and x₂ is as follows: during a coating process, an offline laser thickness gauge is used to monitor the thickness of a coated region in a real-time manner, and a relationship between weight and thickness is established to distinguish the low-compacted-density region 1120 and the high-compacted-density region 1110; a negative electrode plate is cut along a width direction of the low-compacted-density region 1120 to obtain a cross section of the low-compacted-density region 1120; and the upper surface width x₁ and the lower surface width x₂ are tested through a scanning electron microscope.

For example, when the width of the upper surface and the width of the lower surface of the low-compacted-density region 1120 are different, the widths can be tested through 3D printing technology. Specifically, the width of the low-compacted-density region 1120 is determined through modeling, and a percentage of the negative electrode active substance in the slurry is adjusted to form the low-compacted-density region 1120.

In some embodiments, a difference of the upper surface width and lower surface width of the low-compacted-density region 1120 satisfies 0≤|x₁-x₂|≤120 µm. For example, |x₁-x₂| may be 0 µm, 10 µm, 20 µm, 30 µm, 40 µm, 50 µm, 60 µm, 70 µm, 80 µm, 90 µm, 100 µm, 110 µm, or 120 µm, or may fall within a range defined by any of the foregoing values.

In some embodiments, 20 µm≤x₁≤100 mm. For example, x₁ may be 20 µm, 100 µm, 500 µm, 1 mm, 10 mm, 30 mm, 50 mm, 70 mm, 90 mm, or 100 mm, or may fall within a range defined by any of the foregoing values. In some specific embodiments, 20 µm≤x₁≤200 µm.

In some embodiments, 20 µm≤x₂≤100 mm. For example, x₂ may be 20 µm, 100 µm, 500 µm, 1 mm, 10 mm, 30 mm, 50 mm, 70 mm, 90 mm, or 100 mm, or may fall within a range defined by any of the foregoing values. In some specific embodiments, 20 µm≤x₂≤200 µm.

Thus, making the values of x₁ and x₂ fall within the foregoing ranges allows the low-compacted-density region 1120 to have different shapes, thereby increasing the transmission velocity of the electrolyte and improving the charging performance of the secondary battery.

In some embodiments, the negative electrode material layer includes a plurality of low-compacted-density regions 1120 and a plurality of high-compacted-density regions 1110. Based on a total volume of the negative electrode material layer, a ratio of a total volume percentage of the plurality of low-compacted-density regions 1120 to a total volume percentage of the plurality of high-compacted-density regions 1110 may be 0.005-0.01. For example, the ratio may be 0.005, 0.006, 0.007, 0.008, 0.009, or 0.01, or may fall within a range defined by any of the foregoing values. Thus, the transmission velocity of the electrolyte is increased, a percentage of a negative electrode material is increased, and the energy density of the secondary battery is increased.

In some embodiments, based on the total volume of the negative electrode material layer, the total volume percentage of the plurality of low-compacted-density regions 1120 may be 0.005-0.009. For example, the total volume percentage may be 0.005, 0.006, 0.007, 0.008, or 0.009, or may fall within a range defined by any of the foregoing values. Thus, the transmission velocity of the electrolyte is increased, the percentage of the negative electrode material is increased, and the energy density of the secondary battery is increased. In some specific embodiments, based on the total volume of the negative electrode material layer, the total volume percentage of the plurality of low-compacted-density regions 1120 is 0.006-0.008.

In some embodiments, based on the total volume of the negative electrode material layer, the total volume percentage of the plurality of high-compacted-density regions 1110 may be 0.99-0.995. For example, the total volume percentage may be 0.99, 0.991, 0.992, 0.993, 0.994, or 0.995, or may fall within a range defined by any of the foregoing values. Thus, the transmission velocity of the electrolyte is increased, the percentage of the negative electrode material is increased, and the energy density of the secondary battery is increased. In some specific embodiments, based on the total volume of the negative electrode material layer, the total volume percentage of the plurality of high-compacted-density regions 1110 may be 0.992-0.994.

In some embodiments, the negative electrode active substance in a same low-compacted-density region 1120 has different densities, and a density difference of the negative electrode active substance in the same low-compacted-density region 1120 is less than or equal to 0.5 g/cm³. For example, the density difference may be 0.05 g/cm³, 0.1 g/cm³, 0.2 g/cm³, 0.3 g/cm³, 0.4 g/cm³, or 0.5 g/cm³, or may fall within a range defined by any of the foregoing values. Thus, the porosity of the low-compacted-density region 1120 is increased, and the infiltration velocity of the electrolyte is increased. Since the infiltration velocity of the electrolyte is increased, the utilization of the negative electrode active substance in the high-compacted-density region 1110 is improved, the concentration polarization of the negative electrode material layer is reduced, the infiltration velocity of the electrolyte at the negative electrode plate 100 is increased, and the charging performance of the secondary battery is improved.

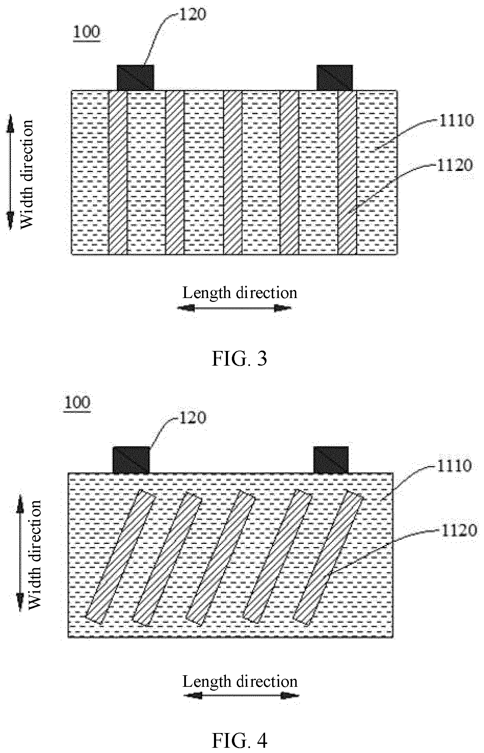

In some embodiments, referring to FIG. 3, an extension direction of the low-compacted-density region 1120 and an extension direction of the high-compacted-density region 1110 are parallel to a width direction of the negative electrode plate 100. Thus, due to a high porosity of the low-compacted-density region 1120, the electrolyte at the bottom of a housing of the secondary battery can be sucked by a capillary action, so that the electrolyte infiltrates the electrode plate, further improving the infiltration of the electrolyte at the negative electrode plate 100 and improving the fast charging performance of the secondary battery.

In some embodiments, referring to FIG. 1, the extension direction of the low-compacted-density region 1120 and the extension direction of the high-compacted-density region 1110 may be parallel to a length direction of the negative electrode plate 100. Referring to FIG. 4, the extension direction of the low-compacted-density region 1120 and the extension direction of the high-compacted-density region 1110 may intersect with but not be perpendicular to the length direction of the negative electrode plate 100. Thus, negative electrode material layers with different porosities may be formed on the negative electrode current collector 110, so that the transmission velocity of the electrolyte is increased, the infiltration of the electrolyte at the negative electrode plate 100 is improved, and the charging performance of the secondary battery is improved.

In some embodiments, the negative electrode current collector 110 is a metal foil or a composite current collector, and the composite current collector includes a polymer material matrix and a metal layer formed on at least one surface of the polymer material matrix.

In some other embodiments, the negative electrode material layer includes a negative electrode active substance, and the negative electrode active substance includes at least one of graphite, soft carbon, hard carbon, mesocarbon microbeads, carbon fiber, carbon nanotubes, elemental silicon, silicon-oxygen compound, silicon-carbon composite, or lithium titanate.

In some embodiments, referring to FIG. 2, along the width direction of the negative electrode plate 100, a cross section of the low-compacted-density region 1120 may be rectangular, trapezoidal, arc-shaped, or irregularly shaped. In some specific embodiments, the cross section of the low-compacted-density region 1120 may be rectangular or trapezoidal.

In some specific embodiments, along the width direction of the negative electrode plate 100, the cross section of the low-compacted-density region 1120 is trapezoidal, where the trapezoid has an upper surface width x₁ and a lower surface width x₂, and |x₁-x₂|≤100 µm. Thus, the infiltration velocity of the electrolyte at the negative electrode plate is increased, and the charging performance of the secondary battery is improved.

A second aspect of this application provides a method for preparing the negative electrode plate 100 according to the first aspect of this application. The method includes the following step:
forming a negative electrode material layer on at least one surface of a negative electrode current collector, where the negative electrode material layer includes a negative electrode active substance, and the negative electrode material layer has a structure in which high-compacted-density regions 1110 and low-compacted-density regions 1120 are consecutively and alternately spaced apart, a density difference of the negative electrode active substances in the high-compacted-density regions 1110 and low-compacted-density regions 1120 being 0.1 g/cm³-0.6 g/cm³, optionally 0.2 g/cm³-0.4 g/cm³. Thus, different regions of the prepared negative electrode material layer have different densities. The high-compacted-density region 1110 has a low porosity, and the low-compacted-density region 1120 has a high porosity. Porosities of adjacent regions are different, which can improve the transmission kinetics of the electrolyte, increase the transmission velocity of the electrolyte, and improve the infiltration of the electrolyte at the negative electrode plate 100.

In some embodiments, a method for forming the negative electrode material layer includes: forming a first slurry in a first region of the negative electrode current collector to form the low-compacted-density region 1120, and forming a second slurry in a second region of the negative electrode current collector to form the high-compacted-density region 1110. Specifically, a mass percentage of the negative electrode active substance in the first slurry may be lower than that of the negative electrode active substance in the second slurry. During the coating process, the first slurry and the second slurry are applied at the same volume. After cold pressing, the thicknesses of the first region and second region are the same, so that the high-compacted-density region 1110 and low-compacted-density region 1120 with different percentages of active substances can be formed. Thus, the high-compacted-density region 1110 and low-compacted-density region 1120 with different porosities can be formed without using any pore-forming agents. After the electrolyte infiltrates the negative electrode plate 100, the different porosities can improve the transmission kinetics of the electrolyte, increase the transmission velocity of the electrolyte, improve the infiltration of the electrolyte at the negative electrode plate 100, and improve the charging performance of the secondary battery.

In some embodiments, no pore-forming agent is used in the method. Thus, negative electrode material layers with different porosities can be formed without using any pore-forming agents, which reduces the production costs of the negative electrode plate 100 while increasing the transmission velocity of the electrolyte and improving the infiltration effect of the electrolyte on the negative electrode plate 100.

The negative electrode plate 100 of this application imposes no special requirements for the current collector and the negative electrode active material, so that various materials commonly used in the field of secondary batteries can be used. For specific materials, refer to the detailed description of the negative electrode plate 100 below. Conventional preparation methods may also be used for preparing the negative electrode plate 100. For example, a negative electrode slurry containing a negative electrode active substance, a conductive agent, a binder, and a thickener is prepared; the obtained slurry is applied onto different regions of a current collector according to different weights; and a negative electrode material layer having regions with different coating weights can be formed on the current collector. Subsequently, the negative electrode plate 100 can be obtained through processes such as drying, cold pressing, and cutting. During cold pressing, the thickness of the negative electrode material layer is pressed to a uniform thickness, so that the negative electrode material layer has a substantially flat surface. In this case, due to the different weights of the negative electrode slurries applied onto the regions of the negative electrode material layer, the densities in the regions are also different. Under different densities, the porosities are also different. Ultimately, the negative electrode plate 100 having a plurality of alternately arranged regions with different porosities is obtained. Particularly, no pore-forming agent is used in the method for preparing the negative electrode plate 100 of this application.

A third aspect of this application provides a secondary battery including the negative electrode plate 100 according to the first aspect of this application.

A fourth aspect of this application provides a battery pack including the secondary battery according to the third aspect of this application.

The battery includes a positive electrode plate, the negative electrode plate 100, a separator, and an electrolyte. During charge and discharge of the secondary battery, active ions are intercalated and deintercalated between the positive electrode plate and the negative electrode plate 100. The separator is disposed between the positive electrode plate and the negative electrode plate 100 for separation. The electrolyte conducts ions between the positive electrode plate and the negative electrode plate 100.

### [Positive electrode plate]

The positive electrode plate includes a positive electrode current collector and a positive electrode active material layer disposed on at least one surface of the positive electrode current collector.

For example, the positive electrode current collector has two opposite surfaces in its thickness direction, and the positive electrode active material layer is disposed on either or both of the two opposite surfaces of the positive electrode current collector.

In some embodiments, the positive electrode current collector may be a metal foil or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, when the secondary battery is a lithium-ion secondary battery, a positive electrode active material may be a well-known positive electrode active material used for lithium-ion secondary batteries in the art. For example, the positive electrode active material may include at least one of the following materials: olivine-structured lithium-containing phosphate, lithium transition metal oxide, and respective modified compounds thereof. However, this application is not limited to these materials, and may alternatively use other conventional materials that can be used as positive electrode active materials for secondary batteries. One type of these positive electrode active materials may be used alone, or two or more of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), lithium nickel cobalt aluminum oxide (for example, LiNi_{0.8}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

For example, when the secondary battery is a sodium-ion secondary battery, the positive electrode active material, as an example, may include but is not limited to at least one of layered transition metal oxide, polyanionic compound, and Prussian blue analogue.

As examples of the layered transition metal oxide, the following may be listed:
Na₁₋ₓCuₕFeₖMnₗM¹ₘO_{2-y}, where M¹ is one or more of Li, Be, B, Mg, Al, K, Ca, Ti, Co, Ni, Zn, Ga, Sr, Y, Nb, Mo, In, Sn, and Ba, 0<x≤0.33, 0<h≤0.24, 0≤k≤0.32, 0<1≤0.68, 0≤m<0.1, h+k+l+m=1, and 0≤y<0.2;
Na_{0.67}Mn_{0.7}Ni_{z}M²_{0.3-z}O₂, where M² is one or more of Li, Mg, Al, Ca, Ti, Fe, Cu, Zn, and Ba, and 0<z≤0.1; and
NaₐLi_{b}Ni_{c}Mn_{d}FeₑO₂, where 0.67<a≤1, 0<b<0.2, 0<c<0.3, 0.67<d+e<0.8, and b+c+d+e=1.

As examples of the polyanionic compound, the following may be listed:
A¹_{f}M³_{g}(PO₄)ᵢOⱼX¹₃₋ⱼ, where A¹ is one or more of H, Li, Na, K, and NH₄, M³ is one or more of Ti, Cr, Mn, Fe, Co, Ni, V, Cu, and Zn, X¹ is one or more of F, Cl, and Br, 0<f≤4, 0<g≤2, 1≤i≤3, and 0≤j≤2;
NaₙM⁴PO₄X², where M⁴ is one or more of Mn, Fe, Co, Ni, Cu, and Zn, X² is one or more of F, Cl, and Br, and 0<n≤2;
NaₚM⁵_{q}(SO₄)₃, where M⁵ is one or more of Mn, Fe, Co, Ni, Cu, and Zn, 0<p≤2, and 0<q≤2; and
NaₛMnₜFe₃₋ₜ(PO₄)₂(P₂O₇), where 0<s≤4, and 0≤t≤3, for example, t is 0, 1, 1.5, 2, or 3.

As examples of the Prussian blue analogue, the following may be listed:
AᵤM⁶ᵥ[M⁷(CN)₆]_{w}·xH₂O, where A is one or more of H⁺, NH4⁺, alkali metal cations, and alkaline earth metal cations, M⁶ and M⁷ are each independently one or more of transition metal cations, 0<u≤2, 0<v≤1, 0<w≤1, and 0<x<6. For example, A is one or more of H⁺, Li⁺, Na⁺, K⁺, NH₄⁺, Rb⁺, Cs⁺, Fr⁺, Be²⁺, Mg²⁺, Ca²⁺, Sr²⁺, Ba²⁺, and Ra²⁺, and M⁶ and M⁷ are each independently one or more of cations of transition metal elements including Ti, V, Cr, Mn, Fe, Co, Ni, Cu, Zn, Sn, and W.

The modified compounds of the foregoing materials may be obtained through doping modification and/or surface coating modification to the materials.

In some embodiments, the positive electrode active material layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode active material layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the foregoing constituents used for preparing the positive electrode plate, for example, the positive electrode active material, the conductive agent, the binder, and any other constituent are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### [Negative electrode plate]

The negative electrode plate includes a negative electrode current collector and a negative electrode active material layer disposed on at least one surface of the negative electrode current collector, and the negative electrode active material layer includes a negative electrode active material.

For example, the negative electrode current collector includes two opposite surfaces in its thickness direction, and the negative electrode active material layer is disposed on either or both of the two opposite surfaces of the negative electrode current collector.

In some embodiments, the negative electrode active material may be a well-known negative electrode active material used for batteries in the art. For example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, and may alternatively use other conventional materials that can be used as negative electrode active materials for secondary batteries. One type of these negative electrode active materials may be used alone, or two or more of them may be used in combination.

In some embodiments, the negative electrode active material layer further optionally includes a binder. The binder may be selected from at least one of styrene butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer further optionally includes a conductive agent. The conductive agent may be selected from at least one of superconducting carbon, acetylene black, carbon black, Ketjen black, carbon dots, carbon nanotubes, graphene, and carbon nanofiber.

In some embodiments, the negative electrode active material layer may further optionally include other additives such as a thickener (for example, sodium carboxymethyl cellulose (CMC-Na)).

In some embodiments, the negative electrode plate may be prepared in the following manner: the foregoing constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

### [Electrolyte]

The electrolyte conducts ions between the positive electrode plate and the negative electrode plate 100. The electrolyte includes an electrolytic salt and a solvent.

In this application, the electrolytic salt may be a common electrolytic salt in a lithium-ion secondary battery, for example, a lithium salt, including a lithium salt that can be used as a highly thermal-stable salt, a lithium salt that can be used as a low-resistance additive, or a lithium salt that inhibits corrosion to an aluminum foil. Examples of the electrolytic salt may be selected from one or more of lithium hexafluorophosphate (LiPF₆), lithium tetrafluoroborate (LiBF₄), lithium hexafluoroarsenate (LiAsF₆), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium difluorophosphate (LiPO₂F₂), lithium difluoro(dioxalato)phosphate (LiDFOP), lithium fluorosulfonate (LiSO₃F), N,N'-difluorooxalate phosphate (NDFOP), Li₂F(SO₂N)₂SO₂F, KFSI, CsFSI, Ba(FSI)₂, and LiFSO₂NSO₂CH₂CH₂CF₃.

The solvent is not specifically limited to any particular type in this application, and may be selected based on actual requirements. In some embodiments, the solvent is a non-aqueous solvent. Optionally, the solvent may include one or more of linear carbonate, cyclic carbonate, and carboxylate. In some embodiments, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methylmethyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma butyrolactone (GBL), tetrahydrofuran, tetramethylene sulfone (SF), methyl sulfone (MSM), ethyl methyl sulfone (EMS), and diethyl sulfone (ESE).

In some embodiments, the electrolyte further optionally includes other additives. For example, the additive may include a negative electrode film-forming additive, or may include a positive electrode film-forming additive, or may include an additive capable of improving some performance of the battery, for example, an additive for improving overcharge performance of the secondary battery, an additive for improving high-temperature performance of the secondary battery, or an additive for improving low-temperature performance of the secondary battery. For example, the additives are selected from at least one of cyclic carbonate compound containing unsaturated bonds, cyclic carbonate compound substituted by halogen, sulfate compound, sulfite compound, sultone compound, disulfonic compound, nitrile compound, aromatic compound, isocyanate compound, phosphonitrile compound, cyclic anhydride compound, phosphite ester compound, phosphate ester compound, borate compound, and carboxylic ester compound.

### [Separator]

The separator is disposed between the positive electrode plate and the negative electrode plate 100 for separation. The separator is not limited to any particular type in this application, and may be any well-known porous separator with good chemical stability and mechanical stability. In some embodiments, a material of the separator may be selected from one or more of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate 100, and the separator may be made into an electrode assembly through winding or stacking.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. As the plastic, polypropylene (PP), polybutylene terephthalate (PBT), polybutylene succinate (PBS), and the like may be listed.

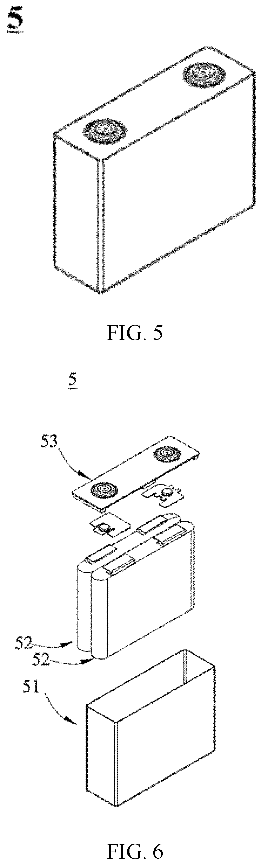

The secondary battery is not limited to any particular shape in this application, and may be cylindrical, rectangular, or of any other shapes. For example, FIG. 5 shows a secondary battery 5 of a rectangular structure as an example.

In some embodiments, referring to FIG. 6, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate 100, and the separator may be made into an electrode assembly 52 through winding or stacking. The electrode assembly 52 is packaged in the accommodating cavity. The electrolyte infiltrates the electrode assembly 52. There may be one or more electrode assemblies 52 in the secondary battery 5, and persons skilled in the art may make choices according to specific actual requirements.

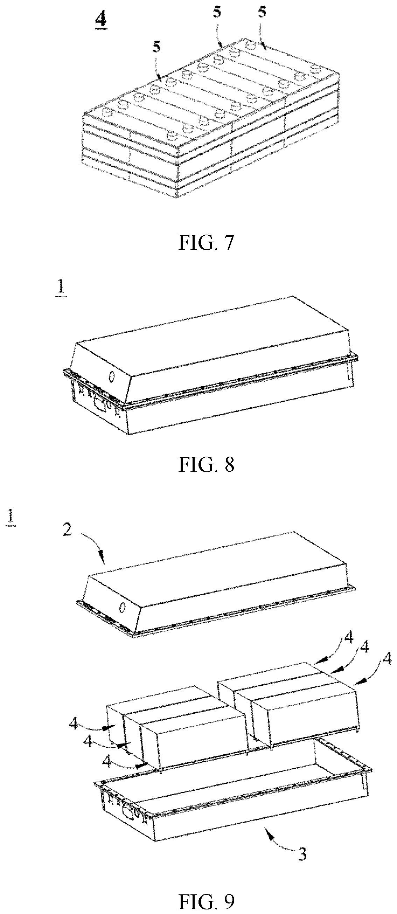

In some embodiments, referring to FIG. 7, the secondary battery 5 may be assembled into a battery module 4, and the battery module 4 may include one or more secondary batteries 5. The specific quantity may be chosen by persons skilled in the art according to use and capacity of the battery module 4. In the battery module 4, a plurality of secondary batteries 5 may be sequentially arranged along a length direction of the battery module 4. Certainly, the secondary batteries 5 may alternatively be arranged in any other manners. Further, the plurality of secondary batteries 5 may be fastened through fasteners. Optionally, the battery module 4 may further include an enclosure with an accommodating space, and the plurality of secondary batteries 5 are accommodated in the accommodating space.

In some embodiments, referring to FIG. 8, the foregoing secondary batteries 5 or battery modules 4 may be assembled into a battery pack 1, and the quantity of the secondary batteries 5 or battery modules 4 included in the battery pack 1 may be chosen by persons skilled in the art based on use and capacity of the battery pack 1.

In some embodiments, referring to FIG. 9, the battery pack 1 may include a battery box and a plurality of secondary battery cells disposed in the battery box. The battery box includes an upper box body 2 and a lower box body 3. The upper box body 2 can cover the lower box body 3 to form an enclosed space for accommodating the secondary battery cells.

A fifth aspect of this application provides an electric apparatus including the secondary battery according to the third aspect of this application or the battery pack according to the fourth aspect of this application. The battery pack may be used as a power source of the electric apparatus or an energy storage unit of the electric apparatus. The electric apparatus may be but is not limited to a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, or an energy storage system. As the apparatus, the battery pack may be selected according to requirements for using the apparatus.

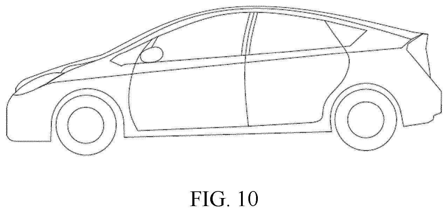

FIG. 10 shows an electric apparatus as an example. This electric apparatus is a battery electric vehicle, a hybrid electric vehicle, a plug-in hybrid electric vehicle, or the like. To satisfy requirements of the electric apparatus for high power and high energy density of the secondary battery, a battery pack or a battery module may be used.

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated. Unless otherwise indicated, all percentages are weight percentages, and all experiments are carried out at normal temperature (25°C) and pressure.

### Example 1

Preparation of lithium-ion secondary battery:
1. Preparation of positive electrode plate
   A nickel cobalt manganese (NCM) ternary material, a conductive agent carbon black, and a binder polyvinylidene fluoride (PVDF) were well stirred and mixed at a weight ratio of 96.7:1.7:1.6 to obtain a positive electrode slurry; and then the positive electrode slurry was evenly applied onto a positive electrode current collector, followed by drying, cold pressing, and cutting, to obtain a positive electrode plate.
2. Preparation of negative electrode plate
   Preparation of first slurry:
      An active substance artificial graphite, a conductive agent carbon black, a binder styrene butadiene rubber (SBR), and a thickener sodium carboxymethyl cellulose (CMC-Na) were dissolved at a weight ratio of 96.8:0.7:1.4:1.1 in a solvent deionized water and well mixed to obtain a first slurry.
   Preparation of second slurry:
      An active substance artificial graphite, a conductive agent carbon black, a binder SBR, and a thickener CMC-Na were dissolved at a weight ratio of 95.6:1.4:1.8:1.2 in a solvent deionized water and well mixed to obtain a second slurry.
      The first slurry and the second slurry were respectively applied onto a high-compacted-density region and a low-compacted-density region through 3D printing technology to obtain a negative electrode plate.
3. Preparation of electrolyte
   In an argon atmosphere glove box (H₂O<0.1 ppm, and O₂<0.1 ppm), organic solvents EC and EMC were well mixed at a volume ratio of 3:7. Then, LiPF₆ was added and dissolved in the organic solvents, with a mass concentration of LiPF₆ being 12.5%. The solution was well stirred to obtain a corresponding electrolyte.
4. Separator
   A 8 µm PE porous film was used as a substrate, and a 2 µm thick ceramic coating was applied onto two surfaces of the PE porous film to obtain a separator.
5. Preparation of secondary battery

The positive electrode plate, the separator, and the negative electrode plate prepared as described above were sequentially stacked so that the separator was located between the positive electrode plate and negative electrode plate for separation. Then, the resulting stack was wound to obtain a jelly roll. The jelly roll was welded with tabs, and then the jelly roll was placed in an aluminum shell and dried at 80°C to remove moisture. Then, an electrolyte was injected, and the aluminum shell was sealed to obtain an uncharged secondary battery. The uncharged secondary battery was sequentially subjected to processes such as standing, hot and cold pressing, formation, shaping, and capacity testing, to obtain a lithium-ion secondary battery product in Example 1.

Preparation methods of secondary batteries in Examples 2 to 49 and Comparative examples 1 to 3 were the same as that in Example 1 except for difference shown in detail in Table 1.

**Table 1**

| No. | Density of high-compacted -density region (g/cm³) | Density of low-compacted -density region (g/cm³) | Compacted density difference of high and low-compacted-density regions (g/cm³) | Upper surface width x₁ of low-compacted-density region (mm) | Lower surface width x₂ of low-compacted -density region (mm) | \|x₁-x₂\| (mm) | Total volume percentage of a plurality of low-compacted-density regions | Total volume percentage of a plurality of high-compacted -density regions | Ratio of total volume percentage of a plurality of low-compacted-density regions to total volume percentage of a plurality of high-compacted -density regions | Density difference of negative electrode active substance in same low-compacted -density region |
|---|---|---|---|---|---|---|---|---|---|---|
| Comparative example 1 | 1.9 | / | / | / | / | / | / | / | / | / |
| Comparative example 2 | 1.9 | 1.2 | 0.7 | 0.2 | 0.1 | 0.1 | 0.006 | 0.994 | 0.006 | 0 |
| Comparative example 3 | 1.8 | 1.75 | 0.05 | 0.2 | 0.1 | 0.1 | 0.006 | 0.994 | 0.006 | 0 |
| Example 1 | 1.7 | 1.1 | 0.6 | 0.2 | 0.1 | 0.1 | 0.006 | 0.994 | 0.006 | 0 |
| Example 2 | 1.7 | 1.3 | 0.4 | 0.2 | 0.1 | 0.1 | 0.006 | 0.994 | 0.006 | 0 |
| Example 3 | 1.6 | 1.3 | 0.3 | 0.2 | 0.1 | 0.1 | 0.006 | 0.994 | 0.006 | 0 |
| Example 4 | 1.6 | 1.4 | 0.2 | 0.2 | 0.1 | 0.1 | 0.006 | 0.994 | 0.006 | 0 |
| Example 5 | 1.6 | 1.5 | 0.1 | 0.2 | 0.1 | 0.1 | 0.006 | 0.994 | 0.006 | 0 |
| Example 6 | 1.5 | 1.3 | 0.2 | 0.2 | 0.1 | 0.1 | 0.006 | 0.994 | 0.006 | 0 |
| Example 7 | 1.6 | 1.4 | 0.2 | 0.2 | 0.1 | 0.1 | 0.006 | 0.994 | 0.006 | 0 |
| Example 8 | 1.75 | 1.55 | 0.2 | 0.2 | 0.1 | 0.1 | 0.006 | 0.994 | 0.006 | 0 |
| Example 9 | 1.9 | 1.7 | 0.2 | 0.2 | 0.1 | 0.1 | 0.006 | 0.994 | 0.006 | 0 |
| Example 10 | 1.9 | 1.8 | 0.1 | 0.2 | 0.1 | 0.1 | 0.006 | 0.994 | 0.006 | 0 |
| Example 11 | 1.8 | 1.2 | 0.6 | 0.2 | 0.1 | 0.1 | 0.006 | 0.994 | 0.006 | 0 |
| Example 12 | 1.8 | 1.3 | 0.5 | 0.2 | 0.1 | 0.1 | 0.006 | 0.994 | 0.006 | 0 |
| Example 13 | 1.8 | 1.6 | 0.2 | 0.2 | 0.1 | 0.1 | 0.006 | 0.994 | 0.006 | 0 |
| Example 14 | 1.9 | 1.8 | 0.1 | 0.2 | 0.1 | 0.1 | 0.006 | 0.994 | 0.006 | 0 |
| Example 15 | 2 | 1.9 | 0.1 | 0.2 | 0.1 | 0.1 | 0.006 | 0.994 | 0.006 | 0 |
| Example 16 | 1.8 | 1.5 | 0.3 | 10 | 130 | 120 | 0.006 | 0.994 | 0.006 | 0 |
| Example 17 | 1.8 | 1.5 | 0.3 | 10 | 110 | 100 | 0.006 | 0.994 | 0.006 | 0 |
| Example 18 | 1.8 | 1.5 | 0.3 | 50 | 100 | 50 | 0.006 | 0.994 | 0.006 | 0 |
| Example 19 | 1.8 | 1.5 | 0.3 | 50 | 51 | 1 | 0.006 | 0.994 | 0.006 | 0 |
| Example 20 | 1.8 | 1.5 | 0.3 | 0.1 | 0.22 | 0.12 | 0.006 | 0.994 | 0.006 | 0 |
| Example 21 | 1.8 | 1.5 | 0.3 | 0.1 | 0.2 | 0.1 | 0.006 | 0.994 | 0.006 | 0 |
| Example 22 | 1.8 | 1.5 | 0.3 | 0.1 | 0.18 | 0.08 | 0.006 | 0.994 | 0.006 | 0 |
| Example 23 | 1.8 | 1.5 | 0.3 | 0.1 | 0.16 | 0.06 | 0.006 | 0.994 | 0.006 | 0 |
| Example 24 | 1.8 | 1.5 | 0.3 | 0.1 | 0.1 | 0 | 0.006 | 0.994 | 0.006 | 0 |
| Example 25 | 1.8 | 1.5 | 0.3 | 0.015 | 0.5 | 0.485 | 0.006 | 0.994 | 0.006 | 0 |
| Example 26 | 1.8 | 1.5 | 0.3 | 0.02 | 0.5 | 0.48 | 0.006 | 0.994 | 0.006 | 0 |
| Example 27 | 1.8 | 1.5 | 0.3 | 0.2 | 0.5 | 0.3 | 0.006 | 0.994 | 0.006 | 0 |
| Example 28 | 1.8 | 1.5 | 0.3 | 1 | 50 | 49 | 0.006 | 0.994 | 0.006 | 0 |
| Example 29 | 1.8 | 1.5 | 0.3 | 10 | 50 | 40 | 0.006 | 0.994 | 0.006 | 0 |
| Example 30 | 1.8 | 1.5 | 0.3 | 100 | 50 | 50 | 0.006 | 0.994 | 0.006 | 0 |
| Example 31 | 1.8 | 1.5 | 0.3 | 110 | 50 | 60 | 0.006 | 0.994 | 0.006 | 0 |
| Example 32 | 1.8 | 1.5 | 0.3 | 0.5 | 0.015 | 0.485 | 0.006 | 0.994 | 0.006 | 0 |
| Example 33 | 1.8 | 1.5 | 0.3 | 0.5 | 0.02 | 0.48 | 0.006 | 0.994 | 0.006 | 0 |
| Example 34 | 1.8 | 1.5 | 0.3 | 0.5 | 0.2 | 0.3 | 0.006 | 0.994 | 0.006 | 0 |
| Example 35 | 1.8 | 1.5 | 0.3 | 50 | 1 | 49 | 0.006 | 0.994 | 0.006 | 0 |
| Example 36 | 1.8 | 1.5 | 0.3 | 50 | 10 | 40 | 0.006 | 0.994 | 0.006 | 0 |
| Example 37 | 1.8 | 1.5 | 0.3 | 50 | 100 | 50 | 0.006 | 0.994 | 0.006 | 0 |
| Example 38 | 1.8 | 1.5 | 0.3 | 50 | 110 | 60 | 0.006 | 0.994 | 0.006 | 0 |
| Example 39 | 1.6 | 1.3 | 0.3 | 0.2 | 0.1 | 0.1 | 0.006 | 0.994 | 0.006 | 0.1 |
| Example 40 | 1.6 | 1.3 | 0.3 | 0.2 | 0.1 | 0.1 | 0.006 | 0.994 | 0.006 | 0.2 |
| Example 41 | 1.6 | 1.3 | 0.3 | 0.2 | 0.1 | 0.1 | 0.006 | 0.994 | 0.006 | 0.5 |
| Example 42 | 1.6 | 1.3 | 0.3 | 0.2 | 0.1 | 0.1 | 0.004 | 0.996 | 0.004 | 0 |
| Example 43 | 1.6 | 1.3 | 0.3 | 0.2 | 0.1 | 0.1 | 0.008 | 0.992 | 0.008 | 0 |
| Example 44 | 1.6 | 1.3 | 0.3 | 0.2 | 0.1 | 0.1 | 0.01 | 0.99 | 0.010 | 0 |
| Example 45 | 1.6 | 1.3 | 0.3 | 0.2 | 0.1 | 0.1 | 0.03 | 0.97 | 0.031 | 0 |
| Example 46 | 1.6 | 1.3 | 0.3 | 0.2 | 0.1 | 0.1 | 0.003 | 0.997 | 0.003 | 0 |
| Example 47 | 1.6 | 1.3 | 0.3 | 0.2 | 0.1 | 0.1 | 0.005 | 0.995 | 0.005 | 0 |
| Example 48 | 1.6 | 1.3 | 0.3 | 0.2 | 0.1 | 0.1 | 0.007 | 0.993 | 0.007 | 0 |
| Example 49 | 1.6 | 1.3 | 0.3 | 0.2 | 0.1 | 0.1 | 0.013 | 0.987 | 0.013 | 0 |

### Performance test

### 1. Test method of charging time at 20% SOC to 80% SOC

A laminated three-electrode test method was used, the positive and negative electrode plates were taken out and then soaked and washed in a DMC solvent for more than 72 h. After the solvent, lithium salt, and additives of the electrolyte were fully leached out, the electrode plates were dried in a vacuum oven. Then, the positive and negative electrode plates were assembled into a laminated three-electrode cell, with a copper wire serving as a reference electrode. At 25°C, the lithium precipitation charging rate at each SOC of the laminated cell was tested. A maximum charging rate was obtained when the potential of the reference electrode dropped to 0 mV. The maximum charging rate at this SOC was recorded. With this method, 5% SOC was used as a point, the maximum charging rate at every 5% SOC was tested, for example, at 20% SOC, 25% SOC, and 30% SOC to 100% SOC. A continuous charging time from 20% SOC to 80% SOC, which served as a fast charging time, was calculated based on the maximum charging rates at 20% SOC to 80% SOC obtained in this test.

Test results of the secondary batteries in Examples 1 to 49 and Comparative examples 1 to 3 were shown in Table 2.

**Table 2**

| No. | Charging time at 20% SOC to 80% SOC (min) |
|---|---|
| Comparative example 1 | 24 |
| Comparative example 2 | 22 |
| Comparative example 3 | 21.5 |
| Example 1 | 7.8 |
| Example 2 | 7.2 |
| Example 3 | 6 |
| Example 4 | 6.5 |
| Example 5 | 6.8 |
| Example 6 | 7.6 |
| Example 7 | 6.5 |
| Example 8 | 17.4 |
| Example 9 | 20.6 |
| Example 10 | 21 |
| Example 11 | 17 |
| Example 12 | 16.5 |
| Example 13 | 19 |
| Example 14 | 20 |
| Example 15 | 21 |
| Example 16 | 20 |
| Example 17 | 18 |
| Example 18 | 16 |
| Example 19 | 13 |
| Example 20 | 9.5 |
| Example 21 | 9 |
| Example 22 | 9.3 |
| Example 23 | 10 |
| Example 24 | 12 |
| Example 25 | 14 |
| Example 26 | 13 |
| Example 27 | 15 |
| Example 28 | 17 |
| Example 29 | 18.8 |
| Example 30 | 20 |
| Example 31 | 21 |
| Example 32 | 13.8 |
| Example 33 | 13.5 |
| Example 34 | 15.2 |
| Example 35 | 17.2 |
| Example 36 | 19 |
| Example 37 | 21 |
| Example 38 | 20.5 |
| Example 39 | 6.2 |
| Example 40 | 6.8 |
| Example 41 | 6.5 |
| Example 42 | 7 |
| Example 43 | 6.5 |
| Example 44 | 8 |
| Example 45 | 6.1 |
| Example 46 | 8 |
| Example 47 | 8.1 |
| Example 48 | 7.6 |
| Example 49 | 6.2 |

Conclusion: The charging times of the secondary batteries in Examples 1 to 49 are shorter than that in Comparative examples 1 to 3, indicating that in this application, the provision of the high-compacted-density regions and low-compacted-density regions on the negative electrode active material layer can increase the transmission velocity of the electrolyte, improve the infiltration of the electrolyte at the negative electrode plate, and thus improve the fast charging performance of the secondary battery.

Although this application has been described with reference to the embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling in the scope of the claims.

## Claims

1. A negative electrode plate, comprising a negative electrode current collector and a negative electrode material layer disposed on at least one surface of the negative electrode current collector, wherein the negative electrode material layer comprises a negative electrode active substance, and the negative electrode material layer has a structure in which high-compacted-density regions and low-compacted-density regions are consecutively and alternately spaced apart, a density difference of the negative electrode active substances in the high-compacted-density regions and low-compacted-density regions being 0.1 g/cm³-0.6 g/cm³, optionally 0.2 g/cm³-0.4 g/cm³.

2. The negative electrode plate according to claim 1, wherein the low-compacted-density region has an upper surface width x₁ and a lower surface width x₂, satisfying 0≤|x₁-x₂|≤100 mm.

3. The negative electrode plate according to claim 2, wherein 0≤|x₁-x₂|≤120 µm, optionally 60 µm≤|x₁-x₂|≤120 µm, and further optionally 80 µm≤|x₁-x₂|≤120 µm.

4. The negative electrode plate according to claim 2 or 3, wherein at least one of the following conditions is met:
20 µm≤x₁≤100 mm, optionally 20 µm≤x₁≤200 µm; and
20 µm≤x₂≤100 mm, optionally 20 µm≤x₂≤200 µm.

5. The negative electrode plate according to any one of claims 1 to 4, wherein at least one of the following conditions is met:
the density of the negative electrode active substance in the high-compacted-density region is 1.6 g/cm³-1.9 g/cm³; and
the density of the negative electrode active substance in the low-compacted-density region is 1.3 g/cm³-1.8 g/cm³.

6. The negative electrode plate according to any one of claims 1 to 5, wherein based on a total volume of the negative electrode material layer, a ratio of a total volume percentage of a plurality of low-compacted-density regions to a total volume percentage of a plurality of high-compacted-density regions is 0.005-0.01.

7. The negative electrode plate according to claim 6, wherein at least one of the following conditions is met:
based on the total volume of the negative electrode material layer, the total volume percentage of the plurality of low-compacted-density regions is 0.005-0.009, optionally 0.006-0.008; and
based on the total volume of the negative electrode material layer, the total volume percentage of the plurality of high-compacted-density regions is 0.99-0.995, optionally 0.992-0.994.

8. The negative electrode plate according to any one of claims 1 to 7, wherein the negative electrode active substance in a same low-compacted-density region has different densities, and a density difference of the negative electrode active substance in the same low-compacted-density region is less than or equal to 0.5 g/cm³.

9. The negative electrode plate according to any one of claims 1 to 8, wherein an extension direction of the low-compacted-density region and an extension direction of the high-compacted-density region are parallel to a width direction of the negative electrode plate.

10. The negative electrode plate according to any one of claims 1 to 9, wherein the negative electrode current collector is a metal foil or a composite current collector, and the composite current collector comprises a polymer material matrix and a metal layer formed on at least one surface of the polymer material matrix.

11. The negative electrode plate according to any one of claims 1 to 10, wherein the negative electrode active substance comprises one or more of graphite, soft carbon, hard carbon, mesocarbon microbeads, carbon fiber, carbon nanotubes, elemental silicon, silicon-oxygen compound, silicon-carbon composite, and lithium titanate.

12. A method for preparing the negative electrode plate according to any one of claims 1 to 11, comprising:
forming a negative electrode material layer on at least one surface of a negative electrode current collector, wherein the negative electrode material layer comprises a negative electrode active substance, and the negative electrode material layer has a structure in which high-compacted-density regions and low-compacted-density regions are consecutively and alternately spaced apart, a density difference of the negative electrode active substances in the high-compacted-density regions and low-compacted-density regions being 0.1 g/cm³-0.6 g/cm³, optionally 0.2 g/cm³-0.4 g/cm³.

13. The method according to claim 12, wherein a method for forming the negative electrode material layer comprises:
forming a first slurry in a first region of the negative electrode current collector to form the low-compacted-density region, and forming a second slurry in a second region of the negative electrode current collector to form the high-compacted-density region.

14. The method according to claim 12 or 13, wherein no pore-forming agent is used.

15. A secondary battery, comprising the negative electrode plate according to any one of claims 1 to 11 or a negative electrode plate prepared using the method according to any one of claims 12 to 14.

16. A battery pack, comprising the secondary battery according to claim 15.

17. An electric apparatus, comprising the secondary battery according to claim 15 or the battery pack according to claim 16.
